# EUROPÄISCHE PATENTSCHRIFT

(11) **EP 2 607 505 B1**
(45) Veröffentlichungstag und Bekanntmachung des Hinweises auf die Patenterteilung: **25.05.2016**
(21) Anmeldenummer: 12008032.0
(22) Anmeldetag: 30.11.2012
(51) Int. Cl.: C22B 7/00, C22B 11/02

(54) **Verfahren zum Abbrennen von kohlenstoffhaltiger trockener metallischer Asche**
Method for burning off carbonaceous dry metallic ash
Procédé de combustion de cendre métallique sèche contenant du carbone

(30) Priorität: 22.12.2011 DE 102011122139
(43) Veröffentlichungstag der Anmeldung: 26.06.2013
(73) Patentinhaber: Heraeus Deutschland GmbH & Co. KG, 63450 Hanau (DE)
(72) Erfinder: Voß, Steffen, 63694 Limeshain (DE); Schapp, Jan, 63303 Dreieich (DE); Ritschel, Norbert, 63828 Kleinkahl (DE)
(74) Vertreter: Heraeus IP

(56) Entgegenhaltungen:
- DE-A1- 3 134 733
- JP-A- 62 046 117
- JP-A- 2001 151 556
- JP-A- 2003 096 503
- JP-A- 2009 270 123
- US-A- 4 450 776
- US-A- 4 466 358

## Beschreibung

Die Erfindung betrifft ein Verfahren zum Abbrennen von kohlenstoffhaltiger trockener metallischer Asche und einer Vorrichtung zur Durchführung des Verfahrens.

Unter metallischer Asche wird das Produkt der Erstverbrennung von Kunststoff und Lösemittel enthaltendem Recyclingmaterial verstanden, das wegen seines Edelmetallgehalts aufgearbeitet wird. Edelmetalle können in derartigem Recyclingmaterial elementar oder chemisch gebunden vorliegen, z.B. als Salze oder Oxide. Die metallische Asche kann demgemäß auch solche Stoffe enthalten.

Nach der Erstverbrennung/Verschwelung enthalten solche Aschen noch erhebliche Anteile an Kohlenstoff, der vor weiteren Recyclingschritten entfernt bzw. auf einen Anteil von unter 3 % gesenkt werden sollte.

Aus JP 2003-096503 A und JP 2001-151556 A sind Vorrichtung zum Sintern von Keramikteilen bekannt. Die Vorrichtungen weisen jeweils einen oberen und einen unteren Boden auf, wobei der obere Boden durch ein Netz gebildet wird, auf dem Keramikteile während des Sinterns gehalten werden.

JP 2009 270123 A und JP 62 046117 A lehren ein Verfahren zur Verbrennung von metallhaltigen Reststoffen, wobei die Verbrennung durch das Einblasen von Luft durch den Reaktorboden erfolgt.

US4360380/DE3134733A1 gibt ein Metallrecyclingverfahren an, bei dem die Verbrennung organischer Anteile bei Temperaturen unterhalb der Verschlackungstemperatur der Silikatanteile durchgeführt wird. Der Einschluss von Metallwertstoffen in Glas soll dadurch vermieden werden:
*"Die Schlackentemperatur von Quarz liegt bei etwa 760°C*. *Wenn daher die Verbrennung bei einer Temperatur zwischen 315 und 480°C sowie in Gegenwart von ausreichend viel oder überschüssigem Sauerstoff bei angemessenem Umrühren erfolgt, hat sich gezeigt, dass der organische Anteile verbrannt wird, ohne dass unerwünschte Silikate gebildet werden*."

Entsprechend wird in DE3134733A1 ein Verfahren mit den folgenden Merkmalen beschrieben:
*"Verfahren zur Wiedergewinnung ausgewählter Metallanteite aus Quarz enthaltenden Schlämmen unter Verbrennen des Schlamms zur Zersetzung organischer Anteile, gefolgt von saurem Auswaschen der Asche und einer hydrometallurgischen Wiedergewinnung der Metallanteile aus den verbleibenden festen und flüssigen Rückständen, wobei die Verbrennung bei einer Temperatur unterhalb der Schlackenbildungstemperatur von Silicaten durchgeführt wird, um den Einschluss von Metallanteilen in Glasmatrizen zu vermeiden, die durch die nachfolgende saure Auswaschung und die hydrometallurgischen Verfahrensschritte nicht angegriffen werden."*

Der Prozess wird gemäß DE3134733A1 in einem Ofen durchgeführt. Die Effizienz des Prozesses soll durch Rühren und Luftzufuhr erhöht werden: *"Darüber hinaus hat sich gezeigt, dass ein Rühren des Schlamms zu dem Zweck, die Temperatur überall verhältnismäßig gleichförmig zu halten und den Zugang von Sauerstoff zum organischen Material zu erhöhen, das Verfahren wesentlich verbessert. Ein Rühren oder eine Zwangsbelüftung werden natürlich in der einen oder anderen Form in vielen Schlammverbrennungseinrichtungen benutzt und werden an sich nicht als neue Merkmale angesehen."*

Demgegenüber stellt die vorliegende Erfindung ein Verfahren zum Abbrand von kohlenstoffhaltigen Schlacken in offenen Wannen unter Wenden an der Luft und mit zusätzlicher Belüftung von unten vor, wie in Anspruch 1 beschrieben. Stand der Technik ist in Übereinstimmung mit DE3134733A1 die Verbrennung in offenen Wannen unter häufigem Wenden mittels Rechen. Die Erfindung stellt mit der zusätzlichen Belüftung von unten eine überraschende Verkürzung des Abbrandprozesses um 50 bis 80% zur Verfügung. Dies ist mehr als ein additiver Effekt und stellt einen überraschenden Synergismus dar. Dabei ist auch einzurechnen, dass nach der Zündung das Material schneller in Brand gerät. Das Wenden mittels Rechen wird zweckmäßig beibehalten, damit weder im Bodenbereich der Wannen noch an der Oberfläche des Brenngutes Verkrustungen auftreten. Der Kohlenstoffanteil wird unter 3% gesenkt.

Es besteht auch die Möglichkeit, die von unten eingeblasene Luft mit Sauerstoff anzureichern, um die Effizienz der Verbrennung zu verbessern.

Ein wesentliches Merkmal des erfindungsgemäßen Verfahrens ist, dass der stoffliche Rücktransport von Asche verhindert wird, während die Luft- bzw. Sauerstoffzufuhr erhalten bleibt.

Im Einzelnen weist das Verfahren die Schritte auf:
a) Beschicken einer Wanne mit metallischer Asche,
b) Belüften von oben mit Umgebungsluft,
c) Einblasen von Luft und/oder Sauerstoff durch einen Metallfasern enthaltenden doppelten Wannenboden,
d) Bringen auf Zündtemperatur,
e) Umrühren der metallischen Asche mittels geeigneten Werkzeugs,
f) wobei der Kohlenstoffanteil auf unter 3% gesenkt Wird,
wobei die Schritte b), c) und d) zeitweise gleichzeitig oder in wechselnder Reihenfolge oder paarweise gleichzeitig oder alle gleichzeitig erfolgen können,

Schritt d) auch punktuell in Teilmengen der metallischen Asche erfolgen kann, und der stoffliche Rücktransport von Asche durch den Wannenboden verhindert wird, während die Luft- bzw. Sauerstoffzufuhr erhalten bleibt.

In einer praktischen Ausführungsform wird der Abbrandprozess in einem Etagenofen an der offenen Wannenoberseite an Umgebungsluft und unter Einblasen von Luft von unten durchgeführt. Die Zeit bis zum Erreichen eines Kohlenstoffanteils von unter 3% beträgt 2 Stunden.

Eine Vorrichtung zur Durchführung eines oben beschriebenen Verfahrens besteht in Form eines Behälters, bevorzugt einer Wanne, die einen von unten belüfteten Boden aufweist. In einer bevorzugten Ausführungsform kann es sich handeln um eine Vorrichtung zur Durchführung eines oben beschriebenen Verfahrens, aufweisend
a) eine Wanne (a1)
b) mit flachem Boden (b2),
c) wobei der Boden (b2) Öffnungen (c3) aufweist,
d) unter dem Boden (b2) Metallfasern (d4) angeordnet sind, die einen Raum (d4a) bilden, abgeschlossen nach unten von einem
e) parallel zum Boden (b2) angeordneten weiteren Wannenboden (e5)
f) mit zu den Öffnungen (c3) versetzt angeordneten weiteren Öffnungen (f6), wobei
g) der Boden (e5) und der Boden (b2) mit Verbindungsmitteln (g7) derart verbunden sind, dass die Metallfasern (d4) fest eingeschlossen sind, und
h) unter dem Boden (e5) ein Raum (h8) vorgesehen ist, zu dem
i) Mittel (i9) zur Einleitung von Luft oder/und Sauerstoff vorgesehen sind.

Der Boden weist Mittel auf, die verhindern, dass Asche durch den Rost fällt, während die Zufuhr der Luft und/oder des Sauerstoffs von unten nicht behindert wird.

Bevorzugt wird dafür ein hohler doppelter Wannenboden mit oberem und Unterem Boden zur Verfügung gestellt. Öffnungen wie z.B. Löcher oder Schlitze im oberen und unteren Boden gewährleisten die Luftzufuhr von unten, während Metallfasern, etwa ein Drahtgestrick oder ähnliches, im Inneren zwischen den Böden dafür sorgen, dass Asche nicht völlig durch die beiden Böden fallen kann. Zusätzlich ist es zweckmäßig, wenn die Öffnungen nicht direkt einander gegenüberliegen, wodurch sich von vornherein eine günstige Durchströmung ergibt.

Insgesamt ergibt das Merkmal des mit einem Metallfasern enthaltenden doppelten Wannenbodens eine überraschend einfache Lösung, um den erwünschten Stofftransport von unten zu ermöglichen und den unerwünschten Stofftransport von oben ausreichend zu behindern.

Ein weiteres zweckmäßiges Merkmal sind Strömungsbrecher, die - richtig angeordnet - für eine weitere Optimierung der Durchströmung sorgen.

Diese können z.B. als Gewebe, Gewirk, Vlies oder Gestrick vorliegen. Sie sind bevorzugt aus Gestrick.

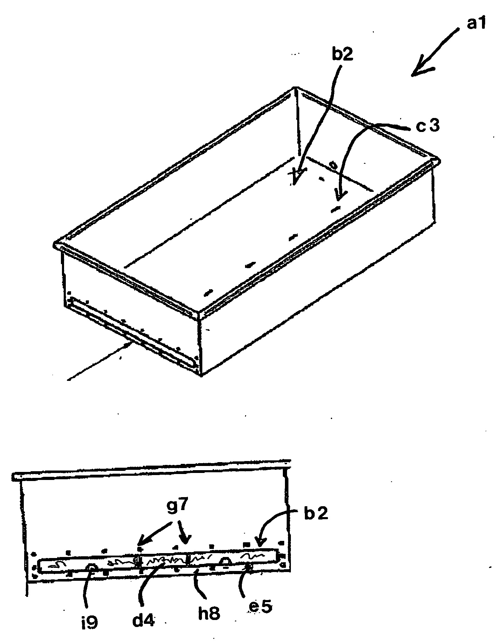

Fig. 1 stellt eine bevorzugte Ausführungsform der Vorrichtung dar.

Es handelt sich dabei um
a) eine Wanne a1,
b) mit flachem Boden b2,
c) wobei der Boden b2 Öffnungen c3 aufweist,
d) unter dem Boden b2 Metallfasern d4 angeordnet sind, die einen Raum d4a bilden, abgeschlossen nach unten von einem
e) parallel zum Boden b2 angeordneten weiteren Wannenboden e5
f) mit zu den Öffnungen c3 versetzt angeordneten weiteren Öffnungen f6, wobei
g) der Boden e5 und der Boden b2 mit Verbindungsmitteln g7 derart verbunden sind, dass die Metallfasern d4 fest eingeschlossen sind, und
h) unter dem Boden e5 ein Raum h8 vorgesehen ist, zu dem
i) Mittel i9 zur Einleitung von Luft oder/und Sauerstoff vorgesehen sind.

Im Raum (h8) können Strömungsbrecher zur Optimierung der Luftzirkulation vorgesehen sein. Die Metallfasern (d4) können als Gewebe, Gewirk, Vlies oder Gestrick vorliegen. Sie sind bevorzugt gestrickt.

## Patentansprüche

1. Verfahren zum Abbrennen von kohlenstoffhaltiger trockener metallischer Asche durch
a) Beschicken einer Wanne mit der metallischen Asche,
b) Belüften von oben mit Umgebungsluft,
c) Einblasen von Luft und/oder Sauerstoff durch einen Metallfasern enthaltenden doppelten Wannenboden,
d) Bringen auf Zündtemperatur,
e) Umrühren der metallischen Asche mittels geeigneten Werkzeugs,
f) wobei der Kohlenstoffanteil auf unter 3% gesenkt wird, und
wobei die Schritte b), c) und d) zeitweise gleichzeitig oder in wechselnder Reihenfolge oder paarweise gleichzeitig oder alle gleichzeitig erfolgen können, und
die Schritte b) und c) mindestens zeitweise gleichzeitig erfolgen, und
Schritt d) auch punktuell in Teilmengen der metallischen Asche erfolgen kann,
**dadurch gekennzeichnet, dass** der stoffliche Rücktransport von Asche durch den Wannenboden verhindert wird, während die Luft- bzw. Sauerstoffzufuhr erhalten bleibt.

2. Verfahren nach Anspruch 1, **dadurch gekennzeichnet, dass** die Metallfasern als Gewebe, Gewirk, Vlies oder Gestrick vorliegen.

## Claims

1. Method for combustion of carbon-containing dry metallic ash by
a) supplying the metallic ash into a trough;
b) aerating from above with ambient air;
c) blowing-in the air and/or oxygen through a metal fibre-containing double trough bottom;
d) heating to ignition temperature;
e) stirring the metallic ash by means of suitable tools;
f) whereby the carbon fraction is being lowered below 3%, and
whereby steps b), c), and d) can take place simultaneously for part of the time or in alternating order or pairs thereof can take place simultaneously or all can take place simultaneously, and steps b) and c) take place simultaneously, at least for part of the time, and step d) can just as well take place selectively in portions of the metallic ash, **characterised in that** the reverse transport of ash material through the trough bottom is prevented, whereas the air and/or oxygen supply is being maintained.

2. Method according to claim 1, **characterised in that** the metal fibres are present as woven fabric, warp-knitted fabric, fleece, and knitted fabrics.

## Revendications

1. Procédé pour brûler des cendres métalliques sèches contenant du carbone en
a) revêtant une cuve avec les cendres métalliques,
b) aérant par le haut par l'air ambiant,
c) soufflant de l'air et/ou de l'oxygène par un fond de la cuve double contenant des fibres métalliques,
d) amenant à la température d'allumage,
e) mélangeant les cendres métalliques au moyen d'un outil approprié,
f) dans lequel la teneur en carbone est réduite à moins de 3 %, et
dans lequel les étapes b), c) et d) peuvent avoir lieu simultanément par périodes ou par ordre successif ou simultanément par paires ou toutes simultanément, et les étapes b) et c) ont lieu au moins simultanément par périodes, et l'étape d) peut avoir également lieu ponctuellement en quantités partielles de cendres métalliques, **caractérisé en ce que** le retour matériel des cendres à travers le fond de la cuve est empêché pendant que l'apport d'air, respectivement d'oxygène, est maintenu.

2. Procédé selon la revendication 1, **caractérisé en ce que** les fibres métalliques sont présentes en tant que tissu, mailles, non-tissé ou tricot.
